Europäisches Patentamt

European Patent Office

Office européen des brevets

(11) Numéro de publication: **0 476 210 A2**

# (12) DEMANDE DE BREVET EUROPEEN

(21) Numéro de dépôt: 90403631.6

(22) Date de dépôt: **18.12.90**

(51) Int. Cl.5: **H04J 3/06**, H04L 25/36

(30) Priorité: **19.09.90 FR 9011535**

(43) Date de publication de la demande:
**25.03.92 Bulletin 92/13**

(84) Etats contractants désignés:
**DE ES FR GB IT SE**

(71) Demandeur: **M E T Société Anonyme dite
19, avenue Carnot
F-91348 Massy Cedéx(FR)**

(72) Inventeur: **Haduong, Tuan
8, rue du Pont de Pierre
F-92160 Antony(FR)**

(74) Mandataire: **Loraux, Jean-Claude Georges
C.G.C.T. 19, Avenue Carnot
F-91348 Massy Cédex(FR)**

(54) Multiplexeur asynchrone.

(57) L'invention concerne un multiplexeur asynchrone à N entrées et une sortie, N étant une puissance de 2.

Le multiplexeur proposé comprend notamment une boucle de synchronisation et d'insertion d'entête (SIE) composée de N blocs de synchronisation et d'insertion (SI1-SIN) sur les entrées desquels sont respectivement connectées N lignes entrantes (L1-LN), un réseau de commutation (RCX) à N entrées (R1-RN) et N sorties (X1-XN), dont les entrées (R1-RN) sont respectivement connectées aux sorties des blocs de synchronisation et d'insertion (SI1-SIN), et une file d'attente logique (FAL) constituée de N files physiques (FA1-FAN) connectées en boucle, lues successivement en ordre séquentiel circulaire, dont les entrées sont respectivement connectées aux sorties (X1-XN) du réseau de commutation (RCX) et dont les sorties sont connectées à la sortie (S0) du multiplexeur.

L'invention est applicable dans les systèmes de transmission de données en mode asynchrone.

**FIG. 1**

La présente invention a pour objet un multiplexeur asynchrone c'est-à-dire un dispositif comprenant une pluralité d'entrées et une seule sortie vers laquelle sont transmis les signaux d'entrée après multiplexage.

Elle est applicable dans les systèmes de transmission de données en mode asynchrone.

Dans les systèmes de transmission du type synchrone la somme des débits des affluents à l'entrée d'un multiplexeur est égale au débit de sortie. Dans les systèmes asynchrones, il y a lieu de séparer le débit brut d'un affluent et le flot des cellules utiles qu'il transporte. Seule importe la comparaison de la sommes des débits utiles des différents affluents avec le débit brut de sortie. Cette somme varie avec le temps. En moyenne elle ne peut être égale au débit brut de sortie, mais, momentanément, elle peut le dépasser, et les cellules qui ne peuvent être émises à temps doivent être stockées dans une ou plusieurs files d'attente. Cette caractéristique, due à l'asynchronisme du mode de transfert, est à la fois source de souplesse en ce qui concerne le nombre et la vitesse brute des affluents, et complexité engendrée par la gestion des files d'attente et la régulation des flux entrants.

La conception d'un multiplexeur asynchrone est donc un compromis entre ces deux facteurs.

Une des caractéristiques du multiplexeur asynchrone à N entrées et une sortie de l'invention réside dans le fait qu'il comprend une boucle de synchronisation et d'insertion d'en-tête composée de N blocs de synchronisation et d'insertion sur les entrées desquels sont respectivement connectées N lignes entrantes, un réseau de commutation à N entrées et N sorties, dont les entrées sont respectivement connectées aux sorties des blocs de synchronisation et d'insertion, et une file d'attente logique constituée de N files physiques connectées en boucle, lues successivement en ordre séquentiel circulaire, dont les entrées sont respectivement connectées aux sorties du réseau de commutation et dont les sorties sont connectées à la sortie du multiplexeur.

Une autre caractéristique du multiplexeur de l'invention réside dans le fait que ledit réseau de commutation est un réseau équivalent du point de vue logique à un réseau du type Oméga inverse.

Une autre caractéristique du multiplexeur de l'invention réside dans le fait qu'il comprend également, dans la boucle de synchronisation et d'insertion, un bloc supplémentaire de tête de boucle.

Une autre caractéristique du multiplexeur de l'invention réside dans le fait qu'il comprend en outre un premier compteur décrémenté d'une unité à l'arrivée de chaque cellule libre lors de l'exploration des entrées du multiplexeur pour donner l'adresse d'aiguillage des cellules libres entrantes successives dans les files d'attente de sortie.

Une autre caractéristique du multiplexeur de l'invention réside dans le fait qu'il comprend également un second compteur incrémenté d'une unité à l'arrivée de chaque cellule occupée lors de l'exploration des entrées du multiplexeur pour donner l'adresse d'aiguillage des cellules occupées entrantes successives dans les files d'attente de sortie.

Les différents objets et caractéristiques de l'invention seront maintenant détaillés dans la description qui va suivre, faite à titre d'exemple non limitatif, en se reportant aux figures annexées qui représentent :

- la figure 1, la structure d'un multiplexeur conçu conformément à la présente invention ;
- les figures 2, le schéma simplifié du multiplexeur de la figure 1 à un instant it ;
- la figure 3, le schéma simplifié du multiplexeur de la figure 2 à un instant it + 1 ;
- la figure 4, un exemple de réalisation d'un commutateur binaire de base du réseau de commutation RCX des figures précédentes conçu conformément à l'invention ;
- la figure 5, un exemple de réalisation d'un réseau de commutation du type Oméga inverse à huit entrées et huit sorties conçu conformément à la présente invention ;
- la figure 6, un exemple d'en-tête d'aiguillage associé à une cellule occupée.

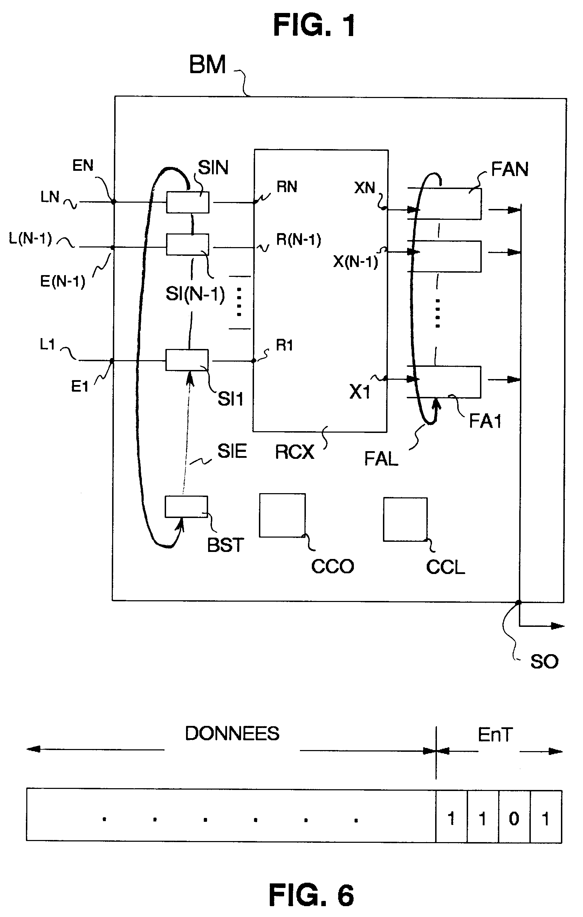

On décrira maintenant, en se reportant au schéma de la figure 1, un exemple de réalisation d'un multiplexeur asynchrone conçu conformément à la présente invention.

Le multiplexeur de la figure 1 se présente sous la forme d'un bloc BM comprenant N entrées référencées E1 à EN, N étant une puissance de 2, et une sortie S0. Sur les entrées E1 à EN, connectées chacune à une ligne entrante L1 à LN, sont fournis des affluents de même débit brut, le débit brut de sortie pouvant être quelconque.

Le multiplexeur de la figure 1 comprend également une boucle de synchronisation et d'insertion d'en-tête SIE composée de N blocs de synchronisation et d'insertion SI1 à SIN et d'un bloc supplémentaire de tête de boucle BST.

Chaque ligne entrante est respectivement connectée à une entrée d'un bloc de synchronisation et d'insertion SI1 à SIN.

Le multiplexeur de la figure 1 comprend également un réseau de commutation RCX à N entrées R1 à RN et N sorties X1 à XN. Les entrées R1 à RN de ce réseau sont respectivement connectées à des sorties non référencées des blocs de synchronisation SI1 à SIN. Ces blocs émettent en synchronisme sur ces entrées.

Le multiplexeur de la figure 1 comprend en outre une file d'attente logique FAL constituée de N files physiques FA1 à FAN connectées en boucle, lues successivement en ordre séquentiel circulaire, dont les sorties sont connectées à la sortie S0. Des entrées non référencées de ces files sont respectivement connectées aux sorties X1 à XN du réseau RCX qui retransmet, en parallèle, les cellules occupées issues des lignes entrantes L1 à LN sur ces entrées.

Selon un mode de réalisation préféré le réseau de commutation RCX est un réseau logiquement équivalent à un réseau de type Oméga inversé. C'est ce type de réseau qui, pour faciliter la description et la compréhension, sera considéré dans ce qui va suivre.

Un réseau Oméga est un réseau de type connu appartenant à la classe des réseaux "delta", eux-mêmes dérivés des réseaux dits "banyan", réseaux multi-étages dont une des caractéristiques réside dans le fait qu'ils comprennent un trajet bien défini entre une entrée quelconque et une sortie quelconque. Comme les réseaux delta, les réseaux Oméga sont également caractérisés par le fait que le routage à travers ces réseaux est commandé à l'aide d'éléments binaires internes.

Un réseau Oméga à N entrées et N sorties, constitué d'éléments de commutation élémentaires ou commutateurs binaires de base à 2 entrées et 2 sorties comprend $K = Log_2 N$ étages, chaque étage comprenant N/2 éléments de commutation. Il est auto-acheminant, et utilise une adresse de destination à K éléments binaires.

D'une façon générale, le réseau Oméga peut fonctionner aussi bien en mode synchrone qu'en mode asynchrone. Mais, alors qu'il peut commuter des paquets simultanés et en parallèle, c'est un réseau bloquant, c'est-à-dire qu'il peut y avoir collision entre des paquets qui sont alors soit perdus soit retardé l'un derrière l'autre. Pour pallier ces inconvénients une solution consiste à augmenter la vitesse de fonctionnement du réseau.

Une autre solution consiste à placer des mémoires tampons dans chaque étage du réseau de commutation.

Le multiplexeur proposé évite ces deux contraintes. Il est basé, notamment, sur un nouveau calcul du routage des cellules à l'intérieur du réseau.

Le multiplexeur de la figure 1 comprend donc à cet effet un premier compteur CCL utilisé pour gérer le routage des cellules libres et un compteur CCO utilisé pour gérer le routage des cellules occupées.

Le compteur CCL est décrémenté d'une unité à l'arrivée de chaque cellule libre lors de l'exploration des entrées du multiplexeur alors que le compteur CCO est incrémenté d'une unité à l'apparition de chaque cellule occupée lors de l'exploration de ces entrées.

Les cellules libres sont ainsi routées successivement dans le sens circulaire descendant des sorties du réseau Oméga inversé, ces cellules n'étant pas prises en compte par les files d'attente, et les cellules occupées sont routées successivement dans le sens circulaire montant des sorties de ce réseau.

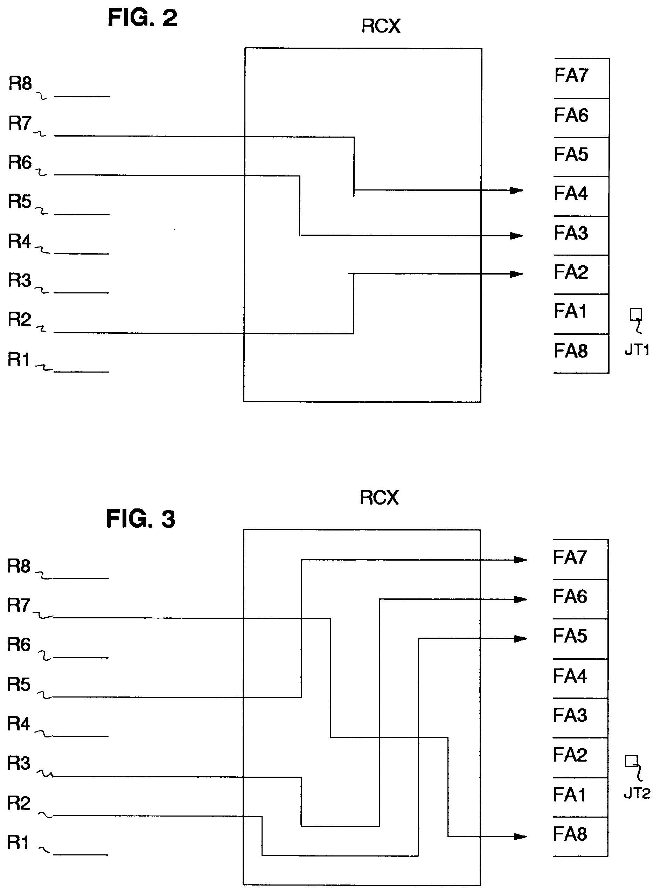

Ce nouveau mode de fonctionnement est illustré par les schémas des figures 2 et 3 où, par simplification, on a supposé que le rythme d'entrée et le rythme de sortie étaient égaux.

Le schéma de la figure 2 représente une configuration du multiplexeur de l'invention à un intervalle de temps $\overline{it}$, le jeton JT1 étant dans la file d'attente physique FA1. A cet instant, seules les entrées R2, R5, et R6 du réseau RCX reçoivent une cellule occupée. Ces cellules sont routées successivement dans le sens circulaire montant des sorties du réseau. Ainsi, la cellule occupée présentée à l'entrée R2 est aiguillée vers la file d'attente physique FA2, celle présentée à l'entrée R5 vers la file d'attente FA3 et celle se présentant à l'entrée R6 vers la file d'attente physique FA4. A l'intervalle de temps suivant $\overline{it+1}$, comme le montre le schéma de la figure 3, le jeton JT2 passe dans la file d'attente FA2. Selon l'exemple choisi, seules les entrées R2, R3, R5 et R7 du réseau RCX reçoivent une cellule occupée. Ces cellules sont aiguillées respectivement vers les files d'attente FA5, FA6, FA7, et FA8, la prochaine cellule occupée qui se présentera étant aiguillée vers la file d'attente suivante, la file FA1 selon l'exemple choisi, le réseau RCX n'ayant, pour simplifier, que 8 entrées et 8 sorties, la file d'attente FAL ne comprenant alors que 8 files d'attente physiques.

On va montrer maintenant que ce nouveau mode ou algorithme d'aiguillage entraîne un routage sans blocage dans le réseau Oméga inversé.

Un réseau Oméga à N entrées et N sorties, N étant comme on l'a vu précédemment une puissance de deux, est une matrice d'interconnexion de $Log_2 N$ colonnes et de N/2 lignes de commutateurs binaires de base, dont la loi de maillage est la suivante :

- pour toute colonne de commutateurs binaires de base, la sortie i est connectée à l'entrée i = $\overline{RotG(i)}$ de la colonne suivante dans le sens de la transmission, i étant un nombre binaire de $Log_2 N$ éléments binaires et $\overline{RotG(i)}$ étant le nombre binaire obtenu à partir de i par une rotation à gauche de i d'une position et RotD(i) correspondant à une rotation à droite.

- les colonnes de commutateurs binaires de base sont numérotées dans l'ordre décroissant K-1, K-2, ..., 0 dans le sens de transmission.

- les fils d'interconnexion sont numérotés de bas en haut, un fil ayant deux numéros différents selon qu'il est considéré comme la sortie d'un commutateur binaire de base ou comme l'entrée du commutateur binaire suivant. Il en est de même pour les fils d'entrée de la matrice, car le même maillage s'applique entre les entrées de la matrice et les entrées de la première colonne de commutateurs. La numérotation des fils de sortie est la même, que ce soit comme sorties de la matrice ou comme sorties de la dernière colonne de commutateurs binaires de base.

On dit que ce maillage réalise un mélange parfait entre les colonnes, dans le sens que la moitié haute et la moitié basse des sorties sont mélangées régulièrement aux entrées.

Le réseau Oméga inverse s'obtient par symétrie du réseau Oméga par rapport à une droite verticale. Il peut aussi se définir aisément de façon autonome en s'inspirant de la loi de maillage du réseau Oméga précédemment citée, et en substituant par exemple RotD à RotG et en inversant l'ordre des colonnes qui devient alors 0, 1, ..., K-1 selon le sens de transmission.

On sait déjà qu'un réseau Oméga d'ordre K (avec $K = Log_2 N$) peut être construit à partir de deux réseaux Oméga disjoints d'ordre K-1 et d'une colonne supplémentaire de commutateurs binaires de base située après l'entrée du nouveau réseau. Le réseau Oméga inverse étant l'image miroir d'un réseau Oméga, le réseau Oméga inverse d'ordre K peut être construit à partir de deux réseaux Oméga inverses disjoints d'ordre K-1 et d'une colonne supplémentaire de commutateurs binaires de base située avant la sortie du nouveau réseau.

En outre, le réseau Oméga est un réseau auto-acheminant où les éléments binaires de routage sont les éléments binaires indiquant l'adresse de destination, les commutateurs binaires de base de la colonne d'ordre n testant l'élément binaire d'ordre n de cette adresse. Il en est de même pour le réseau Oméga inverse dans lequel, selon le sens de transmission, la première colonne est numérotée 0 alors que pour le réseau Oméga c'est la dernière colonne qui est ainsi numérotée.

On rappelle que, à un instant quelconque, l'adresse de destination de la prochaine cellule occupée se présentant à l'entrée du réseau Oméga inversé est donnée par le compteur CCO. Soit $J_i$ cette adresse. L'adresse de destination de la prochaine cellule libre, donnée par le contenu du compteur CCL est alors, comme on l'a vu précédemment, $J_i$ -1, en arithmétique modulo N.

Ce mode de routage sépare bien les deux types de cellules, les cellules occupées étant attribuées successivement dans le sens montant des sorties et les cellules libres dans le sens descendant.

Il est bien évident que cet aiguillage est sans blocage pour un commutateur binaire de base puisque dans tous les cas possibles les adresses de destination sont différentes. On suppose qu'il en est de même pour les réseaux Oméga inverses d'ordre inférieur à K.

On a vu précédemment que le réseau d'ordre K est constitué de deux réseaux d'ordre K - 1 suivi d'un dernier étage de brassage. Quand l'indice i varie de zéro à N/2 - 1, si on considère le sous réseau bas, avec la position initiale $Rotg(J_i)/2$, le mode d'aiguillage d'ordre K-1 réalise bien une séparation des sorties de ce sous réseau sans blocage interne. Après que l'entrée d'indice N/2 - 1 ait été considérée, le compteurs CCO des adresses des cellules occupées du premier sous réseau atteint une valeur $U_i$.

Cette valeur $U_i$ est reprise comme position initiale pour la séparation des sorties du deuxième sous réseau, c'est-à-dire quand l'indice global i varie de N/2 à N - 1. Le mode d'aiguillage d'ordre K-1 réalise maintenant une séparation sans blocage à l'intérieur de ce deuxième sous réseau.

On peut remarquer qu'en appliquant ce mode d'aiguillage de façon globale au réseau d'ordre K, l'attribution des chemins induit les mêmes sous chemins que ceux obtenus séparément comme on vient de le voir. En effet, par la loi de brassage partait, la succession des sorties de la matrice d'ordre K correspond à la succession des commutateurs binaires de base de la dernière colonne, qui correspond elle même à la succession des sorties d'une des deux sous matrices. De plus, cette correspondance est par définition obtenue par une rotation à gauche, puisque le maillage dans le sens de transmission est défini par une rotation à droite.

En conclusion, le mode de routage d'ordre K décrit ne présente pas de blocage pour les K-1 premières colonnes. Il reste à démontrer que la dernière colonne ne présente pas non plus de blocage. Or un blocage dans cette dernière colonne signifierait tout simplement qu'une adresse aurait été attribuée deux fois. Ceci est impossible puisque les adresses des sorties sont toutes attribuées chacune une fois par le mécanisme d'attribution à deux compteurs décrit précédemment.

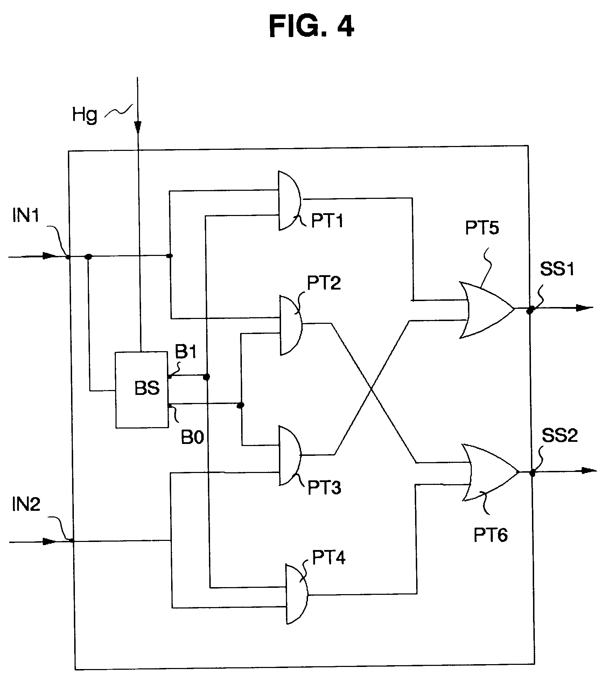

Compte tenu de ce qui vient d'être décrit le réseau utilisé est un réseau Oméga inversé simplifié qui suppose que toutes les entrées sont significatives à chaque instant, que le réseau ne fait pas de diffusion et que les éléments binaires d'aiguillage sont calculés de telle façon que pour chaque traversée, il n'y a aucun blocage interne à l'intérieur de la matrice. Ces hypothèses simplificatrices permettent de concevoir un commutateur binaire de base très simplifié dont un exemple de réalisation est illustré par le schéma de la figure 4. En effet, dans sa forme générale, la logique d'un tel commutateur est relativement complexe car il faut tenir compte des contentions possibles quand deux entrées sont destinées à la même sortie, et éventuellement plus complexe si l'on désire faire de la diffusion d'une entrée sur les deux sorties.

Le commutateur binaire de base du multiplexeur de la présente invention comprend donc essentiellement quatre portes logiques PT1 à PT4 du type ET, deux portes logiques PT5 et PT6 du type OU et un bistable BS.

Une entrée des portes PT1 et PT2 est connectée à une entrée IN1 du commutateur, une entrée des portes PT3 et PT4 étant connectée à une autre entrée IN2 de ce commutateur. Une autre entrée des portes PT1 et PT4 est connectée à une sortie B1 du bistable BS, une autre entrée des portes PT2 et PT3 étant connectée à une autre sortie B0 de ce bistable. Une entrée de signal du bistable BS est connectée à l'entrée IN1 du commutateur et l'entrée de commande de ce bistable est connectée à une source d'impulsions d'horloge Hg de validation. Deux entrées de la porte PT5 sont respectivement connectées à une sortie de la porte PT1 et à une sortie de la porte PT3, deux entrées de la porte PT6 étant respectivement connectées à une sortie de la porte PT2 et à une sortie de la porte PT4. La sortie de la porte PT5 est connectée à une sortie SS1 du commutateur et la sortie de la porte PT6 est connectée à une sortie SS2 de ce commutateur dont le fonctionnement est le suivant : l'impulsion d'horloge Hg valide l'élément binaire d'aiguillage qui se trouve à une position fixe dans chaque cellule. Cet élément binaire est mémorisé dans le bistable BS durant le temps alloué à une cellule. Le bistable BS commande la commutation du commutateur binaire de base de telle sorte que le signal présent à l'entrée IN1 est retransmis soit sur la sortie SS1 le signal présent à l'entrée IN2 étant alors retransmis sur la sortie SS2, soit sur la sortie SS2 le signal présent à l'entrée IN2 étant alors retransmis sur la sortie SS1. Ces deux cas d'aiguillage sont les seuls autorisés. Il est à noter qu'il suffit de tester l'élément binaire de commande sur une seule entrée car les deux entrées sont significatives et l'aiguillage est tel qu'il y ait ni conflit ni duplication dans le commutateur binaire de base.

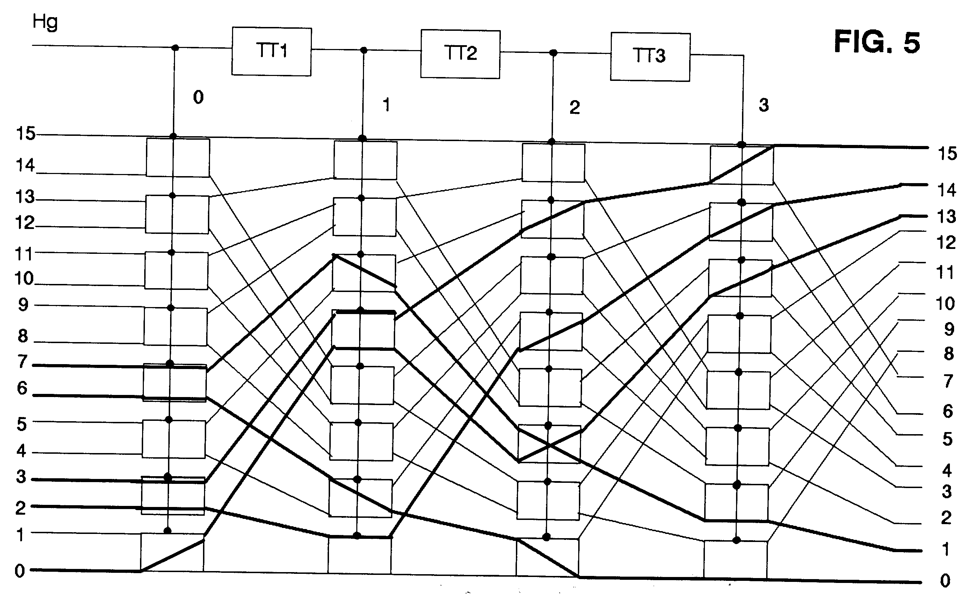

La figure 5 illustre un exemple de réalisation d'un réseau Oméga inverse constitué à l'aide de commutateurs binaires de base identiques à celui de la figure 4. Il est à noter que tous les commutateurs binaires sont exactement semblables et extrêmement simples, ce qui donne lieu à la fois à une implantation régulière de densité élevée dans les circuits intégrés, et à un temps de traversée extrêmement rapide. Par l'intermédiaire de circuits de temporisation TT1, TT2 et TT3 disposés entre chaque étage du réseau de commutation RCX, l'horloge qui fournit les impulsions Hg de validation est simplement retardée d'un délai égal au temps de traversée d'un commutateur binaire de base augmenté du temps de transmission d'un élément binaire. A l'origine, cette horloge est synchronisée avec la transmission du premier élément binaire de chaque cellule.

Compte tenu de ce qui précède, le fonctionnement de la boucle de synchronisation et d'insertion d'en-tête SIE (figure 1) est le suivant : le temps de transmission de cette bouche est exactement égal à celui d'une cellule au débit d'entrée. A chaque temps de cellule, la tête de bouche BST connaît la longueur de la file d'attente logique, l'identité de la première file physique FAi à être utilisée pour la transmission d'une cellule et celle de la première file physique FAj à laquelle doit être envoyée une cellule libre et qui est, comme on l'a vu précédemment, FA(i-1).

La tête de bouche BST envoie par la bouche ces trois paramètres au premier bloc de synchronisation et d'insertion SI1, attend les mêmes paramètres venant du bloc de synchronisation précédent, SIN, temporise pour finir le temps de cellule et recommence ces mêmes opérations.

Parallèlement, la tête de bouche BST, connaissant le rythme de sortie du multiplexeur, décrémente le compteur indiquant la longueur de la file d'attente selon ce rythme.

Les blocs de synchronisation et d'insertion SIi ont pour fonction d'émettre en synchronisme chacun une cellule après avoir assigné à celle-ci un en-tête interne d'aiguillage. Cette tâche est exécutée en séquence dans l'ordre de la bouche, car chaque bloc de synchronisation ne peut travailler qu'après avoir reçu les paramètres venant du bloc précédent.

Dans le cas où il n'y a pas de cellule à envoyer, le bloc de synchronisation concerné devra envoyer une cellule libre avec l'en-tête égal à la position de cellule libre qu'il a reçue, et décrémente (modulo N) le compteur de position des cellules libres. Dans le cas contraire, le bloc de synchronisation vérifie le débordement de la file d'attente logique FAL : si il y a débordement la cellule est détruite et le bloc de synchronisation se comporte comme dans le cas précédent. En l'absence de débordement, le bloc de synchronisation incrémente la longueur de la file d'attente logique FAL et envoie la cellule avec l'en-tête égal à la position de la file physique FAi qu'il a reçue et incrémente (modulo N) cette position.

Le bloc de synchronisation et d'insertion SIi renvoie alors les trois paramètres dans la bouche, soit pour le bloc suivant, soit pour la tête de bouche BST.

Finalement, tous les blocs de synchronisation et d'insertion SIi envoient en synchronisme les cellules qu'ils ont à envoyer dans le réseau Oméga inverse.

Dans une réalisation alternative, on peut confié au bloc de tête de boucle BST une fonction centrale de calcul de tous les en-têtes avant de les envoyer successivement à tous les blocs de synchronisation et d'insertion via la boucle décrite ci-dessus ; les blocs de synchronisation auront alors simplement à recevoir l'en-tête envoyé par la tête de boucle BST au lieu d'avoir à le calculer.

On a représenté, sur le schéma de la figure 5 le trajet, conformément au mode d'aiguillage de l'invention, à travers un réseau Oméga simplifié conformément à l'invention de cinq cellules occupées se présentant respectivement et dans cet ordre sur les entrées 0, 2, 3, 6 et 7 de ce réseau pour être respectivement retransmises aux sorties 13, 14, 15, 0 et 1 de ce réseau à 16 entrées et 16 sorties, les cellules occupées étant retransmises successivement dans le sens circulaire montant des sorties du réseau à partir de la sortie 13 et les cellules libres étant retransmises successivement dans le sens circulaire descendant des sorties à partir de la sortie 13 - 1 = 12.

Selon cet exemple, comme le montre le schéma de la figure 6, les données à transmettre se présentant à l'entrée 0 du commutateur binaire de base du premier étage du réseau de commutation sont précédées d'un en-tête EnT identifiant la sortie 13, c'est-à-dire le mot binaire 1101. Lors de la traversée du premier étage de rang 0 il est procédé à la lecture de l'élément binaire de poids le plus faible de ce mot : "1". Conformément au mode d'aiguillage de l'invention et de la constitution des commutateurs binaires de base qui en résulte, les données présentées sur l'entrée 0 du commutateur du premier étage sont aiguillées sur la sortie supérieure de ce commutateur. Ces données sont donc présentées à l'entrée inférieure du commutateur de base du second étage du réseau de commutation. Il est alors procédé à la lecture du second élément binaire de poids faible de l'en-tête EnT : "0". Les données sont donc, conformément à l'invention, transmises à la sortie inférieure du commutateur binaire du second étage du réseau pour être fournies, suite au maillage du réseau Oméga inverse de l'invention, à l'entrée inférieure du commutateur binaire du troisième étage du réseau. Le troisième élément binaire de poids faible de l'en-tête EnT étant un "1" les données sont fournies à la sortie supérieure du commutateur binaire de ce troisième étage pour être retransmis à une entrée (l'entrée inférieure) d'un commutateur binaire de base du quatrième et dernier étage du réseau de commutation. Le quatrième élément binaire de poids faible de l'en-tête EnT, c'est-à-dire l'élément binaire de poids le plus élevé de cet en-tête, étant un "1" les données sont retransmis sur la sortie supérieure du commutateur binaire de base, c'est-à-dire sur la sortie 13 du réseau. Le routage des données fournies aux entrées 2, 3, 6 et 7 à travers le réseau de commutation s'effectue de façon similaire : un entête identifiant respectivement les sorties 14, 15, 16 et 17 est inscrit dans chaque cellule occupée qui est alors aiguillée à travers le réseau de commutation Oméga inverse en lisant successivement les éléments binaires de ces en-têtes en commençant par les éléments de poids le plus faible. Un "1" commande l'aiguillage sur la sortie supérieure et un "0" commande l'aiguillage sur la sortie inférieure. Dans l'exemple choisi le réseau ne comporte que 16 entrées et 16 sorties numérotées de 0 à 15 et les sorties 16 et 17 identifiées par l'en-tête des cellules fournies aux entrées 6 et 7 sont respectivement les deux sorties venant après la sortie 15 en tournant dans le sens croissant, donc les sorties 0 et 1.

**Revendications**

1. Multiplexeur asynchrone à N entrées et une sortie, N étant une puissance de deux, caractérisé par le fait qu'il comprend notamment une boucle de synchronisation et d'insertion d'entête (SIE) composée de N blocs de synchronisation et d'insertion (SI1-SIN) sur les entrées desquels sont respectivement connectées N lignes entrantes (L1-LN), un réseau de commutation (RCX) à N entrées (R1-RN) et N sorties (X1-XN), dont les entrées (R1-RN) sont respectivement connectées aux sorties des blocs de synchronisation et d'insertion (SI1-SIN), et une file d'attente logique (FAL) constituée de N files physiques (FA1-FAN) connectées en boucle, lues successivement en ordre séquentiel circulaire, dont les entrées sont respectivement connectées aux sorties (X1-XN) du réseau de commutation (RCX) et dont les sorties sont connectées à la sortie (S0) du multiplexeur.

2. Multiplexeur tel que défini en 1, caractérisé par le fait que ledit réseau de commutation (RCX) est un réseau équivalent du point de vue logique à un réseau du type Oméga inverse.

3. Multiplexeur tel que défini en 2, caractérisé par le fait qu'il comprend également, dans la boucle de synchronisation et d'insertion (SIE), un bloc supplémentaire de tête de boucle (BST).

4. Multiplexeur tel que défini en 3, caractérisé par le fait qu'il comprend en outre un premier compteur (CCL) décrémenté d'une unité à l'arrivée de chaque cellule libre lors de l'exploration des entrées (E1-EN) du multiplexeur pour donner l'adresse d'aiguillage des cellules libres entrantes successives dans les files d'attente (FA1-FAN) de sortie.

5. Multiplexeur tel que défini en 4, caractérisé par le fait qu'il comprend également un second compteur (CCL) incrémenté d'une unité à l'arrivée de chaque cellule occupée lors de l'exploration des entrées (E1-EN) du multiplexeur pour donner l'adresse d'aiguillage des cellules occupées entrantes successives dans les files d'attente (FA1-FAN) de sortie.

6. Multiplexeur tel que défini en 3, caractérisé par le fait que le réseau de commutation (RCX) est une matrice d'interconnexion constitué de $Log_2$ N colonnes et de N/2 lignes de commutateurs binaires de base identiques interconnectés de telle façon que, pour toute colonne, la sortie i est connectée à l'entrée $i = RotD(\bar{i})$ de la colonne suivante dans le sens de transmission, i étant un nombre binaire de $Log_2$ N éléments $\bar{i}$ obtenu à partir de i par une rotation à droite de i d'une position, le$\bar{s}$ colonnes de commutateurs binaires de base étant numérotées dans l'ordre croissant (0, 1, 2, 3) dans le sens de transmission, et les fils d'interconnexion étant numérotés de bas en haut, un fil ayant deux numéros différents selon qu'il est considéré comme la sortie d'un commutateur binaire de base ou comme l'entrée du commutateur binaire suivant.

7. Multiplexeur tel que défini en 6, caractérisé par le fait que ledit commutateur binaire de base comprend essentiellement deux entrées (IN1, IN2) et deux sorties (SS1, SS2), quatre portes logiques (PT1-PT4) du type ET, deux portes logiques (PT5, PT6) du type OU et un bistable (BS), une entrée de deux portes ET (PT1, PT2) étant connectée à une entrée (IN1) dudit commutateur, une entrée des deux autres portes ET (PT3, PT4) étant connectée à l'autre entrée (IN2) du commutateur de base, dont les sorties (SS1, SS2) sont respectivement connectées à une sortie des portes de type OU (PT5, PT6).

8. Multiplexeur tel que défini en 7, caractérisé par le fait que ledit bistable (BS) comprend une entrée de signal connectée à une entrée (IN1) dudit commutateur, une entrée de commande connectée à une source d'impulsions d'horloge de validation (HG), une sortie (B1) connectée à une entrée de deux portes ET (PT1, PT4), et une sortie (B0) connectée à une entrée des deux autres portes ET (PT2, PT3).

9. Multiplexeur tel que défini en 8, caractérisé par le fait qu'il comprend également, un circuit de temporisation (TT1, TT2, TT3) intercalé entre chaque étage (0, 1, 2, 3) du réseau de commutation (RCX), qui reçoit lesdites impulsions d'horloge de validation (Hg) pour fournir aux commutateurs binaires de base d'un étage ou d'une colonne du réseau de commutation (RCX) des impulsions de validation retardée par rapport à celles fournies aux commutateurs binaires de base de l'étage précédent d'un délai égal au temps de traversée d'un commutateur binaire de base augmenté du temps de transmission d'un élément binaire.

# FIG. 1

# FIG. 6

**FIG. 2**

RCX

R8

R7

R6

R5

R4

R3

R2

R1

FA7

FA6

FA5

FA4

FA3

FA2

FA1

FA8

JT1

**FIG. 3**

RCX

R8

R7

R6

R5

R4

R3

R2

R1

FA7

FA6

FA5

FA4

FA3

FA2

FA1

FA8

JT2

# FIG. 4

FIG. 5